Europäisches Patentamt

(19) European Patent Office

Office européen des brevets

(11) Veröffentlichungsnummer: **0 011 101**
**B1**

(12) EUROPÄISCHE PATENTSCHRIFT

(45) Veröffentlichungstag der Patentschrift:
20.01.82

(51) Int. Cl.³: **G 01 H 1/00**

(21) Anmeldenummer: 79103414.3

(22) Anmeldetag: 12.09.79

(54) Verfahren und Anordnung zur Eliminierung von auf Inhomogenitäten der Permeabilität und der elektrischen Leitfähigkeit zurückzuführenden Störeffekten bei der Schwingungsmessung an rotierenden oder schwingenden Elementen.

(30) Priorität: 13.11.78 DE 2849235

(43) Veröffentlichungstag der Anmeldung:
28.05.80 Patentblatt 80/11

(45) Bekanntmachung des Hinweises auf die Patenterteilung:
20.01.82 Patentblatt 82/3

(84) Benannte Vertragsstaaten:
BE CH FR GB IT NL SE

(56) Entgegenhaltungen:
FR-A-2 276 588
US-A-3 393 557
US-A-3 971 982
US-A-4 134 303

(73) Patentinhaber: Licentia Patent-Verwaltungs-GmbH,
Theodor-Stern-Kai 1, D-6000 Frankfurt/Main 70 (DE)

(72) Erfinder: Winterhoff, Horst, Dipl.-Phys., Kiefernweg 8,
D-6072 Dreieich (DE)

(74) Vertreter: Lertes, Kurt, Dr., Licentia
Patent-Verwaltungs-GmbH Theodor-Stern-Kai 1,
D-6000 Frankfurt 70 (DE)

## Verfahren und Anordnung zur Eliminierung von auf Inhomogenitäten der Permeabilität und der elektrischen Leitfähigkeit zurückzuführenden Störeffekten bei der Schwingungsmessung an rotierenden oder schwingenden Elementen

Die Erfindung bezieht sich auf ein Verfahren und eine Anordnung zur Eliminierung von auf Inhomogenitäten der Permeabilität und der elektrischen Leitfähigkeit zurückzuführenden Störeffekten bei der Schwingungsmessung an einem rotierenden oder schwingenden Element, wobei dem Element ein elektrischer, ein Wicklungssystem aufweisender und mittels Hochfrequenz erregter Schwingungsaufnehmer zugeordnet ist, der den Luftspalt zwischen dem Element und dem Aufnehmer misst.

Bei der Schwingungsuntersuchung an hochtourig laufenden Maschinenwellen mittels eines von einer hochfrequenten Trägerfrequenz beaufschlagten Schwingungsaufnehmers treten Störsignale auf, die nicht mit der Wellenschwingung und damit der mechanischen Unrundheit der Welle zusammenhängen, sondern die auf unterschiedliche Permeabilität und Leitfähigkeit des Wellenmaterials im Bereich der Oberfläche zurückzuführen sind.

Diese Störeffekte werden auch als „electrical runout" bezeichnet.

Durch Entmagnetisierung ist nur eine Veränderung oder teilweise Beseitigung der Störeffekte möglich.

Um die Inhomogenitäten der Permeabilität auf der Wellenoberfläche zu beseitigen, wird diese mittels eines besonderen Vibrators einer Art von Hammerschlägen ausgesetzt, durch die sich die elektrischen Eigenschaften der Welle ändern. Diese Behandlung ist unter der Bezeichnung „micro peening" bekannt (Druckschrift „Turbodyne Corp., Steam Turbine Division", April 1975).

Der Einfluss der Inhomogenitäten des Wellenmaterials kann auch durch Aufbringen von Ringen aus homogenem Material auf die Welle vermieden werden. Die Luftspaltmessung erfolgt dann nur im Bereich dieser Ringe.

Schliesslich kann auch ein Rollieren mit speziellen Werkzeugen auf einer Drehbank erfolgen, so dass eine Kaltverformung des Wellenmaterials auftritt.

Der Erfindung liegt die Aufgabe zugrunde, ein Verfahren und Anordnungen zu schaffen, mit denen eine elektronische Eliminierung der vorstehend genannten Störeffekte möglich ist.

Diese Aufgabe wird erfindungsgemäss dadurch gelöst, dass dem Wicklungssystem des Schwingungsaufnehmers zwei unterschiedliche Trägerfrequenzen zugeführt werden, die gleichzeitig oder nacheinander auftreten, und dass die am Schwingungsaufnehmer in den zwei Messspannungen auftretenden Störanteile elektrisch auf gleiche Amplitude eingestellt und die Messspannungen sodann voneinander abgezogen werden.

Zur Durchführung dieses Verfahrens weist eine Anordnung mit einem elektrischen, ein Wicklungssystem aufweisenden und mittels Hochfrequenz erregten Schwingungsaufnehmer erfindungsgemäss die folgenden Merkmale auf:
a) das Wicklungssystem des Schwingungsaufnehmers ist an zwei unterschiedliche Frequenzen erzeugende Autodyn-Oszillatoren gekoppelt,
b) Einrichtungen zur Einstellung der Amplituden der Störanteile der Messspannungen des Schwingungsaufnehmers,
c) eine den Einstelleinrichtungen nachgeordnete Subtrahierschaltung,
d) ein der Subtrahierschaltung nachgeordnetes Sichtgerät.

Eine andere Anordnung zur Durchführung des erfindungsgemässen Verfahrens mit einem elektrischen, ein Wicklungssystem aufweisenden und mittels Hochfrequenz erregten Schwingungsaufnehmer ist durch die folgenden Merkmale gekennzeichnet:
a) dem Wicklungssystem des Schwingungsaufnehmers sind zwei unterschiedliche Frequenzen erzeugende Trägerfrequenzoszillatoren zugeordnet,
b) zwei phasenempfindliche, je von einem der Oszillatoren und einer der Messspannungen des Schwingungsaufnehmers angesteuerte Gleichrichter,
c) Einrichtungen zur Einstellung der Amplituden der Störanteile der Messspannungen,
d) ein den Einstelleinrichtungen nachgeordneter Rechenverstärker,
e) ein dem Rechenverstärker nachgeordnetes Sichtgerät.

Der durch die Erfindung erzielte Vorteil besteht insbesondere darin, dass weder für die Beseitigung von Inhomogenitäten der Permeabilität oder einer Magnetisierung auf der Oberfläche des Elementes, noch für die Beseitigung von Schwankungen der elektrischen Leitfähigkeit des Elementenmaterials aufwendige und zeitraubende Massnahmen erforderlich sind (Montagen, Demontagen, Untersuchung auf Magnetismus usw.), sondern dass die auftretenden Störeffekte einfach beibehalten werden, jedoch gleich mittels der bereits vorhandenen Luftspalt-Messmittel und Messung bei zwei unterschiedlichen Trägerfrequenzen elektronisch eliminiert werden.

Die Erfindung wird nachstehend anhand von in der Zeichnung schematisch dargestellten Ausführungsbeispielen näher erläutert. Es zeigen
Fig. 1 eine prinzipielle Ausbildung des beim Verfahren verwendeten Schwingungsaufnehmers mit einer nachgeschalteten elektronischen Messeinrichtung zur Durchführung des Verfahrens,
Fig. 2 ein Signaldiagramm mit an bestimmten Punkten der Messeinrichtung auftretenden Messspannungen,
Fig. 3 ein weiteres Signaldiagramm mit Messspannungen, deren Verlauf sich gegenüber denen nach Fig. 2 unterscheidet,
Fig. 4 eine andere Ausbildung der elektronischen Messeinrichtung.

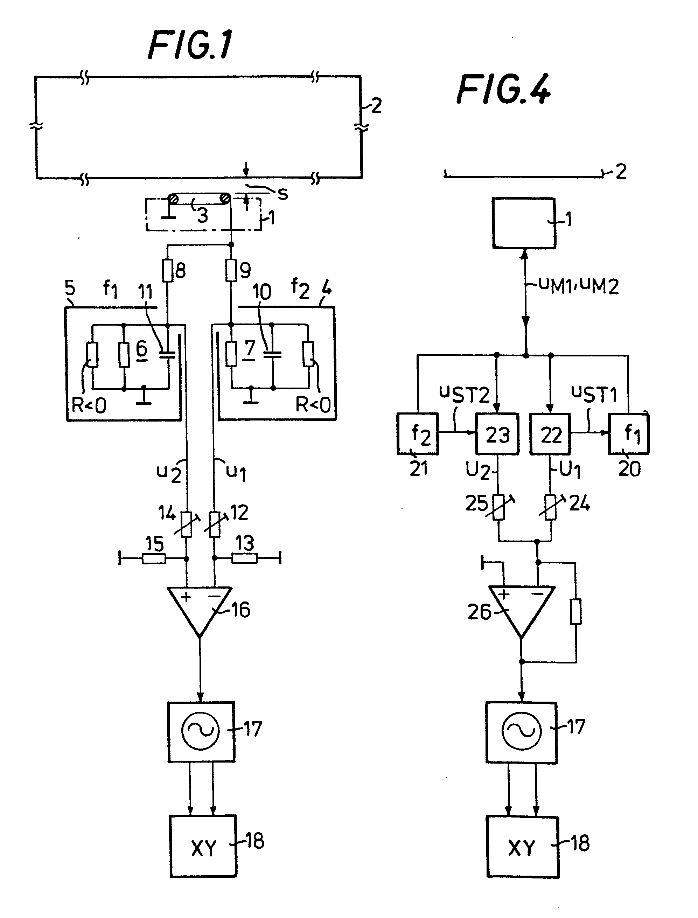

Der Schwingungsaufnehmer 1 nach der Fig. 1 umfasst eine vor einer Maschinenwelle 2 angeordnete Messwicklung 3, die Teil zweier Oszillatorschaltungen 4, 5 mit Schwingkreisen 6, 7 (Autodyn-Oszillatoren) ist, so dass die Messwicklung 3 zu Eigenschwingungen erregt wird, wobei deren Schwingamplitude auf Güteänderungen der Wicklung anspricht. Die Wicklung 3 ist über Widerstände 8, 9 an die Schwingkreise 6, 7 angekoppelt, die auf unterschiedliche Frequenzen $f_1$ (beispielsweise 1,2 MHz) und $f_2$ (beispielsweise 1,6 MHz) mittels der Kondensatoren 10, 11 abgestimmt sind.

Anstelle einer gemeinsamen Wicklung 3 für beide Trägerfrequenzen können den Oszillatoren auch Einzelwicklungen zugeordnet sein.

Der Schwingungsaufnehmer 1 misst den sich zwischen der Messwicklung 3 und dem Element 2 ergebenden Luftspalt s und erzeugt eine vom Spalt abhängige Messspannung. Wird die Messwicklung 3 mit einem hochfrequenten Wechselstrom der Frequenz f erregt, so werden in der gegenüberliegenden Metalloberfläche des Elementes 2 Wirbelströme induziert, die auf die erregende Wicklung 3 zurückwirken und einen vom Luftspalt s abhängigen Messeffekt liefern.

Neben dem eigentlichen Messignal der Wellenschwingung treten in dessen Kurvenverlauf Störsignale auf, die dadurch entstehen, dass die Wirbelströme von der elektrischen Leitfähigkeit und der magnetischen Permeabilität des Wellenmaterials beeinflusst werden.

Wirk- und Blindwiderstand der Messwicklung 3 hängen vom Luftspalt, von der magnetischen Permeabilität und der elektrischen Leitfähigkeit des Elementes 2 sowie von der Trägerfrequenz f ab.

Die den Messwert der Wellenschwingung beeinflussenden Leitfähigkeits- und/oder Permeabilitätsänderungen des Wellenmaterials werden nun eliminiert, indem bei zwei verschiedenen Frequenzen $f_1$, $f_2$ gemessen wird. Die Messspannungen $u_1$, $u_2$ des Schwingungsaufnehmers 1 sind über Spannungsteiler 12, 13 und 14, 15 einem Differenzverstärker 16 zugeführt; die Widerstände 12, 14 sind dabei einstellbar ausgebildet. Dem Differenzverstärker 16 ist ein Speicheroszillograph 17 nachgeschaltet, dem ein Zweikoordinatenschreiber 18 zugeordnet sein kann.

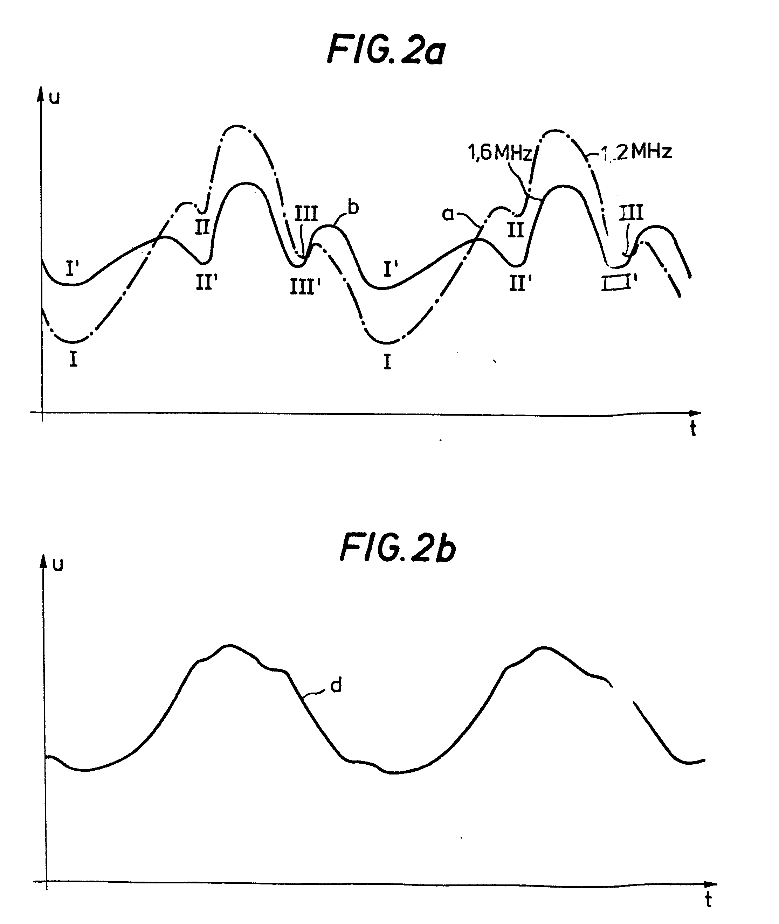

Nachstehend wird die Wirkungsweise anhand der Signaldiagramme nach den Fig. 2a bis 3b näher erläutert.

Liegt beispielsweise eine Maschinenwelle 2 zwar mit einem Schlag, aber ohne schwankender elektrischer Leitfähigkeit und/oder magnetischer Permeabilität bestimmter Oberflächenzonen vor, so ergeben sich bei den Erregerfrequenzen $f_1$ und $f_2$ zwei unterschiedliche Signalspannungen $u_1$ und $u_2$, die beide den Schlag der Welle eindeutig beschreiben.

Weist die Maschinenwelle jedoch Zonen schwankender elektrischer Leitfähigkeit und magnetischer Permeabilität auf, so ergibt sich nunmehr bei in Bewegung befindlicher Welle und Abtastung dieser Zonen durch den Schwingungsaufnehmer 1 bei der Erregerfrequenz $f_1$ die Überlagerung eines Messignals und eines Störsignals und bei der Erregerfrequenz $f_2$ eine andere Überlagerung eines Messignals und eines Störsignals, wobei das Amplitudenverhältnis des Messignals zum Störsignal ein anderes ist als bei der Erregerfrequenz $f_1$. Fig. 2a verdeutlicht diesen Sachverhalt; es liegen hier Oberflächenzonen der Welle 2 mit schwankender elektrischer Leitfähigkeit vor.

Der strichpunktiert dargestellte Kurvenzug a ergibt sich bei einer Trägerfrequenz $f_1$ von beispielsweise 1,2 MHz und der durchgezogen dargestellte Kurvenzug b beispielsweise bei einer Trägerfrequenz $f_2$ von 1,6 MHz. Wie ersichtlich, überlagern sich der durch den Schlag der Welle erzeugten Schwingung in jedem Kurvenzug a, b drei Störschwingungen I, II, III bzw. I', II', III'.

Da die Wellenoberfläche Zonen mit unterschiedlicher elektrischer Leitfähigkeit aufweist, haben die drei Störschwingungen I, II, III bzw. I', II', III' auch unterschiedliche Amplituden; so ist die Amplitude der Störschwingung I grösser als die der Störschwingung II und diese ist wieder grösser als die der Störschwingung III. Entsprechend der unterschiedlichen Trägerfrequenzen $f_1$, $f_2$ sind auch die Amplituden der Signale a, b unterschiedlich; die Signale a, b treten als Messspannungen $u_1$, $u_2$ an den Spannungsteilern 12, 13, 14, 15 auf. Unter Beobachtung des Kurvenzuges des Sichtgerätes 17 werden nun mittels der veränderbaren Widerstände 12, 14 die Amplituden der Störschwingungen I, II, III auf gleiche Amplitude mit den Störschwingungen I', II', III' eingestellt, so dass sich für diese eine Differenz Null ergibt. Damit ist der in der Messspannung enthaltene Störanteil elektrisch eliminiert und am Ausgang des Differenzverstärkers 16 tritt nur noch ein Messignal d mit einem in der Fig. 2b dargestellten, hier noch nicht vollständig kompensierten Kurvenverlauf auf. Wie ersichtlich, sind die Störschwingungen bis auf unerhebliche Reste reduziert, so dass allein das Schlagsignal der Welle zur Verfügung steht, das über das Sichtgerät 17 ausgewertet werden kann.

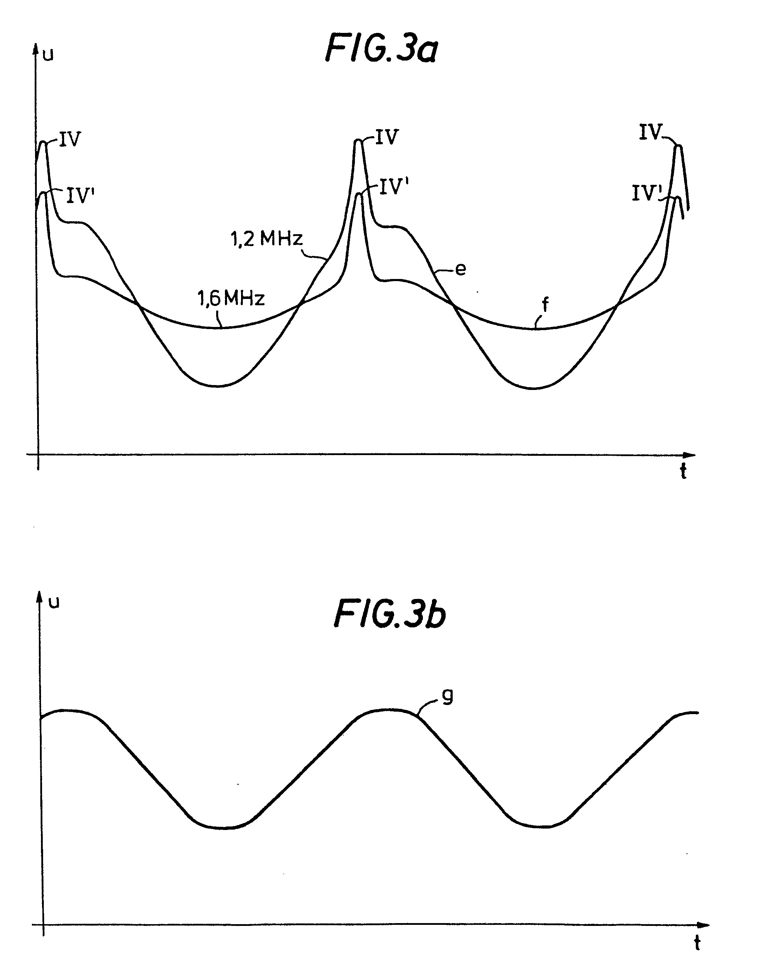

In den Fig. 3a, 3b sind Kurvenverläufe dargestellt, die sich bei Oberflächenzonen der Welle mit schwankenden Permeabilitäten ergeben. Ausser der eigentlichen Wellenschwingung enthalten die Kurvenzüge e, f die Störschwingungen IV bzw. IV'. Die Trägerfrequenzen sind wieder 1,2 MHz und 1,6 MHz und entsprechend sind die Amplituden der Signale e, f des Schwingungsaufnehmers unterschiedlich. Der Abgleich der Amplituden der Störschwingungen IV und IV' erfolgt wie vorstehend beschrieben, so dass am Ausgang des Differenzverstärkers 16 bzw. am Sichtgerät 17 ein Signal g mit einem aus Fig. 3b ersichtlichen Verlauf auftritt, das nur noch die Wellenschwingung darstellt.

Fig. 4 zeigt eine andere Ausbildung der elektronischen Messeinrichtung. Der Schwingungsaufnehmer 1 hat in diesem Fall beispielsweise zwei Erregerwicklungen, wie nicht weiter dargestellt ist.

Für dieses Wicklungssystem sind zwei Trägerfrequenzoszillatoren 20, 21 vorgesehen, wobei der Oszillator 20 eine Frequenz $f_1$ von beispielsweise 1,2 MHz und der Oszillator 21 eine Frequenz $f_2$ von beispielsweise 1,6 MHz erzeugt. Das Wicklungssystem des Schwingungsaufnehmers 1 wird von den Oszillatoren 20, 21 gleichzeitig erregt.

Die Messspannungen $u_{M1}$, $u_{M2}$ des Schwingungsaufnehmers 1 werden je einem phasenempfindlichen Gleichrichter 22, 23 zugeführt, wobei der Gleichrichter 22 mittels einer Spannung $u_{ST1}$ des Oszillators 20 und der Gleichrichter 23 mittels einer Spannung $u_{ST2}$ des Oszillators 21 gesteuert wird.

Die Ausgangssignale $U_1$, $U_2$ der Phasengleichrichter 22, 23 gelangen auf einen aus veränderbaren Widerständen 24, 25 und einem Operationsverstärker 26 bestehenden Summierkreis, dessen Ausgangsspannung ein Sichtgerät 17 ansteuert, dem wieder ein Zweikoordinatenschreiber 18 zugeordnet sein kann.

Die Eliminierung der Störanteile in der Wellenschwingung erfolgt wieder dadurch, dass durch Einstellung der Widerstände 24, 25 die Amplituden der Störschwingungen auf gleiche Grösse gebracht werden.

## Patentansprüche

1. Verfahren zur Eliminierung von auf Inhomogenitäten der Permeabilität und der elektrischen Leitfähigkeit zurückzuführenden Störeffekten bei der Schwingungsmessung an einem rotierenden oder schwingenden Element (2) wobei dem Element (2) ein elektrischer, ein Wicklungssystem (3) aufweisender und mittels Hochfrequenz erregter Schwingungsaufnehmer (1) zugeordnet ist, der den Luftspalt (5) zwischen Element und dem Aufnehmer misst, dadurch gekennzeichnet, dass dem Wicklungssystem (3) des Schwingungsaufnehmers (1) zwei unterschiedliche Trägerfrequenzen $(f_1, f_2)$ zugeführt werden, die gleichzeitig oder nacheinander auftreten, und dass die am Schwingungsaufnehmer (1) in den zwei Messspannungen $(u_1, u_2; u_{M1}, u_{M2})$ auftretenden Störanteile elektrisch auf gleiche Amplitude eingestellt und die Messspannungen sodann voneinander abgezogen werden.

2. Anordnung mit einem elektrischen, ein Wicklungssystem (3) aufweisenden und mittels Hochfrequenz erregten Schwingungsaufnehmer (1) zur Durchführung des Verfahrens nach Anspruch 1, ekennzeichnet durch die folgenden Merkmale:
a) das Wicklungssystem (3) des Schwingungsaufnehmers (1) ist an zwei unterschiedliche Frequenzen $(f_1, f_2)$ erzeugende Autodyn-Oszillatoren (4, 5) gekoppelt,
b) Einrichtungen (12 bis 15) zur Einstellung der Amplituden der Störanteile (I, II, II; I', II', III') der Messspannungen $(u_1, u_2)$ des Schwingungsaufnehmers (1),
c) eine den Einstelleinrichtungen (12 bis 15) nachgeordnete Subtrahierschaltung (16),
d) ein der Subtrahierschaltung (16) nachgeordnetes Sichtgerät (17).

3. Anordnung mit einem elektrischen, ein Wicklungssystem aufweisenden und mittels Hochfrequenz erregten Schwingungsaufnehmer (1) zur Durchführung des Verfahrens nach Anspruch 1, gekennzeichnet durch die folgenden Merkmale:
a) dem Wicklungssystem des Schwingungsaufnehmers (1) sind zwei unterschiedliche Frequenzen $(f_1, f_2)$ erzeugende Trägerfrequenzoszillatoren (20, 21) zugeordnet,
b) zwei phasenempfindliche, je von einem der Oszillatoren (20, 21) und einer der Messspannungen $(u_{M1}, u_{M2})$ des Schwingungsaufnehmers angesteuerte Gleichrichter (22, 23),
c) Einrichtungen (24, 25) zur Einstellung der Amplituden der Störanteile (I, II, III; I', II', III') der Messspannungen $(u_{M1}, u_{M2})$,
d) ein den Einstelleinrichtungen (24, 25) nachgeordneter Rechenverstärker (26),
e) ein dem Rechenverstärker (26) nachgeordnetes Sichtgerät (17).

## Claims

1. A method of eliminating interference caused by inhomogeneities in permeability and electrical conductivity in vibration measurement on a rotating or vibrating element (2), in which an electrical vibration pick-up (1), which is energised by means of high frequency and has a winding system (3), is associated with the element (2) and measures the clearance (s) between the element and the pick-up, characterised in that two different carrier frequencies $(f_1, f_2)$ are simultaneously or consecutively supplied to the winding system (3) of the vibration pick-up (1), that the interference components which arise at the vibration pick-up (1) in the two measurement voltages $(u_1, u_2; u_{M1}, u_{M2})$ are set electrically to the same amplitude, and that the measured voltages are then subtracted one from the other.

2. An arrangement with an electrical vibration pick-up (1), which is energised by means of high frequency and has a winding system (3) for carrying out the method according to claim 1, characterised by the following features:
a) the winding system (3) of the vibration pick-up (1) is coupled to autodyne oscillators (4, 5) which generate two different frequencies $(f_1, f_2)$,
b) devices (12 to 15) for setting the amplitudes of the interference components (I, II, III; I', II', III') of the measured voltages $(u_1, u_2)$ of the vibration pick-up (1),
c) a subtraction circuit (16) arranged after the setting devices (12 to 15),
d) a viewer (17) arranged after the subtraction circuit (16).

3. An arrangement with an electrical vibration pick-up (1), which has a winding system and is energised by means of high frequency for carrying out the method according to claim 1, characterised by the following features:
a) carrier frequency oscillators (20, 21) generating two different frequencies $(f_1, f_2)$ are associated with the winding system of the vibration pick-up (1),
b) two phase-sensitive rectifiers (22, 23) each controlled by one of the oscillators (20, 21) and one of the measurement voltages $(u_{M1}, u_{M2})$,
c) devices (24, 25) for setting the amplitudes of the interference components (I, II, III; I', II', III') of the measurement voltages $(u_{M1}, u_{M2})$,

d) an operational amplifier (26) arranged after the setting devices (24, 25),
e) a viewer (17) arranged after the operational amplifier (26).

## Revendications

1. Procédé pour éliminer des effets parasites dus à des non-uniformités de la perméabilité et de la conductivité électrique dans la mesure de la vibration sur un élément (2) tournant ou vibrant, selon lequel un capteur de vibration (1) électrique, présentant un système d'enroulement (3) et excité par haute fréquence, est conjugué à l'élément pour mesurer l'entrefer (s) entre l'élément et le capteur, caractérisé en ce que l'on applique au système d'enroulement (3) du capteur de vibration (1), simultanément ou l'une après l'autre, deux fréquences porteuses ($f_1$, $f_2$) différentes, on ajuste électriquement à la même amplitude les fractions parasites apparaissant dans les deux tensions de mesure ($u_1$, $u_2$; $u_{M1}$, $u_{M2}$) fournies par le capteur (1), puis on retranche l'une des tensions de mesure de l'autre.

2. Dispositif pour la mise en œuvre du procédé selon la revendication 1, comprenant un capteur de vibration (1) électrique, présentant un système d'enroulement (3) et excité par haute fréquence, caractérisé en ce que:
a) le système d'enroulement (3) du capteur (1) est couplé à deux oscillateurs autodynes (4, 5) produisant des fréquences ($f_1$, $f_2$) différentes,
b) des dispositifs (12 à 15) sont prévus pour ajuster les amplitudes des fractions parasites (I, II, III; I', II', III') des tensions de mesure ($u_1$, $u_2$) fournies par le capteur (1),
c) un montage de soustraction (16) est prévu à la suite des dispositifs d'ajustement (12 à 15),
d) un appareil de visualisation (17) est prévu à la suite du montage de soustraction (16).

3. Dispositif pour la mise en œuvre du procédé selon la revendication 1, comprenant un capteur de vibration (1) électrique, présentant un système d'enroulement et excité par haute fréquence, caractérisé en ce que:
a) deux oscillateurs de fréquence porteuse (20, 21) produisant des fréquences ($f_1$, $f_2$) différentes sont conjugués au système d'enroulement du capteur de vibration (1),
b) l'un des oscillateurs (20, 21) et l'une des tensions de mesure ($u_{M1}$, $u_{M2}$) fournies par le capteur pilote contrôlent chaque fois l'un des deux redresseurs (22, 23) à sensibilité de phase,
c) des dispositifs (24, 25) sont prévus pour ajuster les amplitudes des fractions parasites (I, II, III; I', II', III') des tensions de mesure ($u_{M1}$, $u_{M2}$),
d) un amplificateur opérationnel (26) est prévu à la suite des dispositifs d'ajustement (24, 25),
e) un appareil de visualisation (17) est prévu à la suite de l'amplificateur opérationnel (26).

# FIG.1

# FIG.4

# FIG.2a

# FIG.2b

# FIG.3a

# FIG.3b